# EUROPEAN PATENT SPECIFICATION

(11) **EP 0 757 425 B1**
(45) Date of publication and mention of the grant of the patent: **07.04.1999**
(21) Application number: 96112079.7
(22) Date of filing: 26.07.1996
(51) Int. Cl.: H02K 15/12

(54) **Method and apparatus for applying resin to armatures of dynamoelectric machines**
Verfahren und Vorrichtung zur Harzbeschichtung auf Läufern von dynamoelektrischen Maschinen
Procédé et dispositif d'application d'une résine aux induits des machines dynamoélectriques

(30) Priority: 31.07.1995 US 1708; 16.11.1995 US 558433
(43) Date of publication of application: 05.02.1997
(73) Proprietor: AXIS SpA, 50028 Tavarnelle Val di Pesa (Firenze) (IT)
(72) Inventor: Luciani, Sabatino, 50019 Sesto Fiorentino (FI) (IT)
(74) Representative: Lotti, Giorgio

(56) References cited:
- EP-A- 0 509 366
- US-A- 3 386 382
- PATENT ABSTRACTS OF JAPAN vol. 006, no. 077 (E-106) 14 May 1982 & JP-A-57 013 951 (MEIDENSHA ELECTRIC MFG CO LTD) 25 January 1982
- PATENT ABSTRACTS OF JAPAN vol. 011, no. 243 (P-603) 08 August 1987 & JP-A-62 054 137 (SHIMADZU CORP) 09 March 1987

## Description

### Background of the Invention

The present invention relates to improvements in resin impregnation operations of the type carried out during manufacturing of armatures such as those used in electric motors or generators (collectively, "dynamoelectric machines"). More particularly, the invention relates to improved methods and apparatus for dripping controlled volumes of resin at resin dripping stations.

Previously known resin impregnation equipment attempts to dispense predetermined volumes of liquid resin onto the wire coils which have been wound within the slots of the lamination stack of the armature. The liquid resin is dispensed by dripping it onto the outside turns of these wire coils in the area where the coils protrude from the axial ends of the lamination stack. After the resin has been dripped onto the coils, it migrates, due to its viscosity and its mass, in a manner similar to capillary action, throughout the coil in order to fill any air gaps existing between the wires. After this operation, the resin usually is solidified by heating the armature to a temperature of between about 80°C and about 90°C, and then cooling it back to room temperature.

The solidified resin bonds the coil wires together in order to make the coils as a whole extremely compact and to avoid unwanted vibration of the coil wires when the armature is caused to rotate as a rotor in the electric motor into which it is ultimately assembled. A further benefit which is obtained from impregnating the coils to eliminate the air gaps present between the wires is that the armature is able to dissipate heat more easily when it is operating in the electric motor into which it is ultimately assembled. All of these factors contribute to improving the quality of the finished armature, which consequently brings with it an increase in the longevity of the electric motor into which the armature is ultimately assembled.

In previously known techniques, after the armature is wound, the resin is applied to the coils by dripping it from resin dispensers which are aligned over the areas of the coils that protrude from the axial ends of the lamination stack. To obtain a uniform distribution of the resin in the coils and in an attempt to fill as many air gaps as possible, the armatures are rotated continuously while the resin dispensers drip the resin on the coils. To achieve this, the resin dispensers are fed with resin by means of pumps which supply a predetermined volume of resin per unit time.

By presetting the flow of these pumps and by causing them to operate for a preset time, one can attempt to guarantee that predetermined weights of resin are applied to the coils in order to try to achieve the objects of resin impregnation as set forth above. To supply a preset weight of resin to the coils of the armature and to cause it to migrate uniformly is the underlying principle for achieving good impregnation results.

A first drawback which exists in the previously known techniques is that to guarantee application of a precise volume of resin to the coils of the armature, volumetric pumps based on piston displacement are used to pump the resin to the resin dispensers. These pumps supply an extremely precise volume of resin per unit time. However, they are expensive, and once in use they are often subject to malfunction if they are not cleaned meticulously to remove residual resin which would otherwise solidify and harden on their moving parts.

Other types of pumps such as peristaltic pumps have used in the previously known systems instead of volumetric pumps, again in an attempt to pump preset quantities of resin in a required time. However, while peristaltic pumps are less expensive than piston displacement pumps, they are also less precise in delivering constant quantities of resin per unit time.

Because the weight of resin which is supplied by a peristaltic pump is affected by the viscosity of the resin during pumping, these pumps are characterized by the production of undesirable variations in the weight of resin delivered when there are temperature variations in the resin that affect the viscosity. Such temperature variations in the resin are quite common and very difficult to control.

Impregnating devices of this type are known from prior art document US-A-3 386 382.

It is known to apply resin to armatures in stages. For example, a resin applying system may have four stations. In such systems, different amounts of resin may be applied at different stations. This allows time for the migration of resin to take place in a particular armature during the intervals in which that armature is moving between stations. For example, at the first station, a relatively large amount of resin may be applied, because the armature has previously had no resin applied, and therefore can absorb a large amount between the turns of its coils. At successive stages, less and less resin is applied because it takes longer for the partially saturated armature to absorb the additional resin. In such systems, there is generally one measurement of the total amount of resin being applied per unit time by the system as a whole, with the amount being applied at each station determined by presetting the valves or drip nozzles of each station to a smaller or larger flow rate, so that it dispenses a smaller or larger fraction of the total resin being dispensed. The calibration of the valves or nozzles for this purpose in previously known systems has been performed manually. The operator would place a container under each nozzle and manually measure the amount dispensed into each container by each respective nozzle in a given time. The operator would adjust each nozzle or its valve and allow the nozzle to again dispense resin into the container, repeating the process until the relative amounts dispensed by the nozzles were as desired.

It would be desirable to be able to provide a method and apparatus for applying known quantities of resin to the armatures of dynamoelectric machines without using costly piston displacement pumps.

It would also be desirable to be able to provide a method and apparatus for applying known quantities of resin to the armatures of dynamoelectric machines based on measurement of the weight of the resin as it is being applied.

It would further be desirable to be able to provide a simplified method for adjusting resin application stations that drip resin onto armatures of dynamoelectric machines.

### Summary of the Invention

It is an object of this invention to provide a method and apparatus for applying known quantities of resin to the armatures of dynamoelectric machines without using costly piston displacement pumps.

It is also an object of this invention to provide a method and apparatus for applying known quantities of resin to the armatures of dynamoelectric machines based on measurement of the weight of the resin as it is being applied.

It is a further object of this invention to provide a simplified method for adjusting resin application stations that drip resin onto armatures of dynamoelectric machines.

In accordance with this invention, there is provided a system for applying resin to armatures of dynamoelectric machines. The system includes at least one resin dispenser for dripping resin on the armatures, a conveyor for transporting the armatures past the at least one resin dispenser, a first reservoir for containing a supply of resin to be dripped onto the armatures by the at least one resin dispenser, means for maintaining a substantially constant pressure on the supply of resin in the first reservoir, and a dispensing conduit for conducting the resin from the first reservoir to the at least one resin dispenser. A dispenser valve is present in the dispensing conduit between the first reservoir and the at least one resin dispenser. A means for weighing the first reservoir and producing weight signal indicative of the weight of the first reservoir is provided, along with a control unit, having memory therein, for receiving the weight signal and for controlling the dispenser valve. The control unit further is capable of receiving operator instructions. On receiving operator instructions to dispense a quantity of resin by weight, the control unit stores in the memory the instantaneous weight of the first reservoir, causes the dispenser valve to open, monitors the weight of the first reservoir, and closes the dispenser valve when the weight of the first reservoir has decreased by that quantity. Methods for operating the system and for calibrating its dispensers are also provided.

### Brief Description of the Drawings

The above objects and advantages of the invention will be apparent upon consideration of the following detailed description, taken in conjunction with the accompanying drawings, in which like reference characters refer to like parts throughout, and in which:
FIG. 1 is a partially fragmentary perspective view of an armature in a resin applying station of a preferred embodiment of a system according to the present invention;
FIG. 2 is a schematic view of a preferred embodiment of a resin applying system according to the present invention.

### Detailed Description of the Invention

According to the present invention, a method and apparatus are provided for monitoring the weight of resin supplied to the resin dispensers of an armature impregnation system, in order to assure that the resin dispensers apply a precise weight of resin to the armature coils. By means of this invention, precise quantities of resin may applied to the armatures being impregnated and this precision can be maintained substantially constant throughout long periods of manufacturing.

This invention is particularly suited to resin impregnation as employed in modern motor manufacturing lines where predetermined weights of resin are to be dripped on the armature coils in a series of successive resin application stages at successive stations. At each of these stations a certain number of resin dispensers preferably drip a fraction of the total amount of resin which needs to be applied. At each station, the armature is to receive a precise weight of resin. Between these stations there is a pause in the application of resin during which the armature is transported to a successive station at which there are number of additional resin dispensers.

The measurement of the weight of resin being applied is accomplished by supplying the resin from a reservoir which is being weighed continually. Preferably, the reservoir is mounted on a scale platform which may be any suitable type of scale, such as a spring-loaded platform, a balance, a strain gauge, or any other type of scale, preferably with an electronically readable output that can be used by an automated control system. When resin is to be applied, the control system checks the weight of the reservoir, begins resin application while continuing to monitor the reservoir weight, and stops reservoir application when the reservoir weight has decreased by the weight of resin to be applied. When more than one resin dispenser or resin dispensing station is involved, the system preferably still monitors only the total weight dispensed from the reservoir, with the relative flow rates of the various dispensers adjusted in advance. Thus, to achieve the delivery of a particular weight of resin from a particular dispenser, one can calculate how much has to be delivered from all active dispensers; conversely, if one knows how much resin has been delivered in total, one can calculate how much resin has been delivered by a particular dispenser. In fact, if there is more than one dispenser, then as long as their relative flow rates are known, the actual weight of resin delivered by any one dispenser can be derived from the total weight delivered regardless of how many of the dispensers are active, as long as it is known which are active.

An improved pumping technique is also provided according to a preferred embodiment of this invention for transferring the resin from a resin source to the resin dispensers. This pumping technique avoids costly pumps, is easy to clean and is able to produce substantially constant pumping pressures. Specifically, air under pressure preferably is supplied to the reservoir from any suitable compressor or other supply of compressed air. The air under pressure preferably is fed through a pressure regulator to maintain a substantially constant pressure. The pressure drives the resin from the reservoir to the dispensers when the dispenser valves are open.

By using a substantially standard source of compressed air to provide the pressure that moves the resin, and by using measurement of weight to control the quantity of resin, this invention eliminates the need for costly piston displacement pumps, providing resin dispensing equipment which is relatively inexpensive and readily available.

In addition, the system includes an automated electronic control system, which may be based on any suitable conventional microprocessor or computer. The control system preferably is provided with a user interface that is easy to use for the operator, and that preferably provides visual and aural displays that are easy to understand.

The system according to the invention preferably also monitors the amount of resin available, and notifies the operator if the supply should be refilled or replaced. Preferably, the system is designed so that the initial source is a standard drum of resin as supplied by a resin manufacturer. Resin preferably is pumped from that drum to a monitoring reservoir which has automatic level monitors, capable of determining at least when the monitoring reservoir is full, when it approaches a threshold level at which it should be refilled, and when the level falls further below the threshold level (indicating a potential malfunction as discussed below). After resin is dispensed from the pressurized, weighed main reservoir described above, a pump pumps additional resin from the monitoring reservoir until the scale indicates a weight that represents the main reservoir being full. While the resin is actually being dispensed, an isolation valve closes to prevent any resin from being pumped into the main reservoir, to maintain the pressure on the resin from the compressed air line, and to prevent any error in determining the weight of resin dispensed that would arise from adding resin while it is being dispensed.

As resin is pumped from the monitoring reservoir to the main reservoir, and the resin level in the monitoring reservoir drops to the threshold level discussed above, another pump is activated to pump resin from the supply -- e.g., the drum -- to the monitoring reservoir. If the level in the monitoring reservoir continues to drop, or if within a certain time interval after the activation of the supply pump the level has not increased, an error may be indicated as discussed below.

The resin dispensing equipment of this invention is preferably capable of annunciating alarms when there are malfunctions that cause imprecise quantities of resin to be dripped, which could lead to irreparable damage of the armatures. Also, the resin dispensing equipment of this invention can supply substantially continuous information on the performance of the impregnation equipment -- e.g., to allow a trend analysis based on the dispensed quantities of resin which have been applied as a function of the production time. This information also allows for a timely warning to the operator to replenish the main resin sources when they are near to being depleted.

For example, as discussed above, if the resin level in the monitoring reservoir continues to drop after the supply pump is activated, or does not increase within a certain time interval thereafter, an indication is preferably given to the operator. The operator would then check to see if the supply reservoir is empty. If so, he would refill it from an external source, or, if it is a drum as discussed above, replace it. If the supply were not empty, however, the operator would then know that some other problem had arisen. For example, the supply pump may be malfunctioning. The operator could take the necessary steps to prevent damage to armatures, including shutting down the equipment, if necessary, until repairs could be made.

If the control system is programmed with the original weight of resin in the supply reservoir, then it could keep track of the weight dispensed, and then advise the operator as the weight dispensed approached the original weight of the supply. The operator would then know that the supply will soon need to be refilled or replaced. And if the measured weight dispensed reached the original supply weight, but the level indicated in the monitoring reservoir were not below the refill threshold, then a potential malfunction of either the scale or the level monitors, or both, could be indicated to the operator. Similarly, if the level monitors indicated insufficient supply even though the total weight dispensed according to the scale did not approach the original supply weight, then a malfunction of the scale or the level monitors could be indicated. Other components could be monitored and error indications provided to the operator for investigation and possible repair.

As in previously known systems, the resin dispensers of the present invention preferably have adjustable flow rates -- i.e., with a supply under a given pressure, the weight of resin that will flow from a dispenser per unit time can be adjusted. For example, the orifice through which the resin is dispensed could be made larger or smaller, or each dispenser could have an adjustable valve. In the preferred embodiment the control system allows easy calibration of the flow rate of each dispenser.

Each dispenser preferably has its own separately controllable valve. To calibrate a particular dispenser, the operator would instruct the control system to open the valve of that dispenser only, and to close it after a predetermined duration. With the normal pressurization of the resin reservoir activated, the weight of resin dispensed during the calibration duration would be measured, yielding a flow rate. If necessary, the operator could then adjust the dispenser to increase or decrease the flow rate, and then instruct the system to dispense resin from that dispenser during another calibration duration. These steps could be repeated until the desired flow rate is achieved. The same steps could be performed for other dispensers until all dispensers were calibrated. Alternatively, if the valve is the adjustable component as suggested above, the operator would instruct the control system to vary the degree to which the valve is opened during each calibration duration, until the desired flow rate is achieved.

With all of the dispensers calibrated, the system preferably can be used to apply different amounts of resin at different stations. In one preferred embodiment, the dispensers at different dispensing stations are calibrated with different flow rates. In another preferred embodiment, with the dispenser flow rates known, the various dispensers can be turned on (by means of their respective valves) for different durations. In this second preferred embodiment, the dispensers would most preferably be calibrated with identical flow rates, but there is no reason why a combination of different flow rates and different durations could not be used. Either way, the maximum duration for which any dispenser could be turned on is limited by the time that the conveyor carrying the armatures can remain stopped at a resin dispensing station; this time generally is dictated by other parameters of the armature- or motor-manufacturing line.

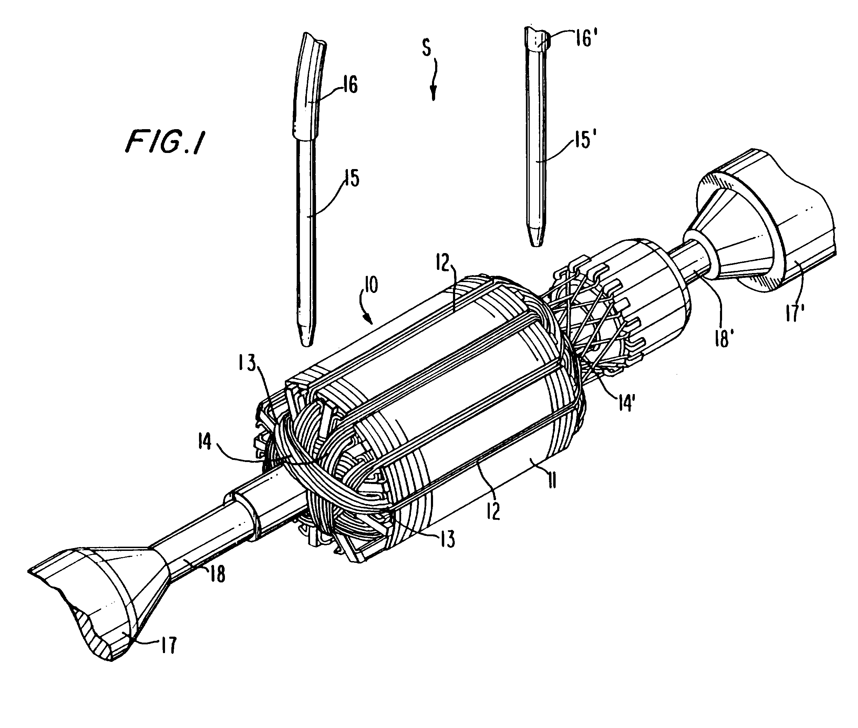

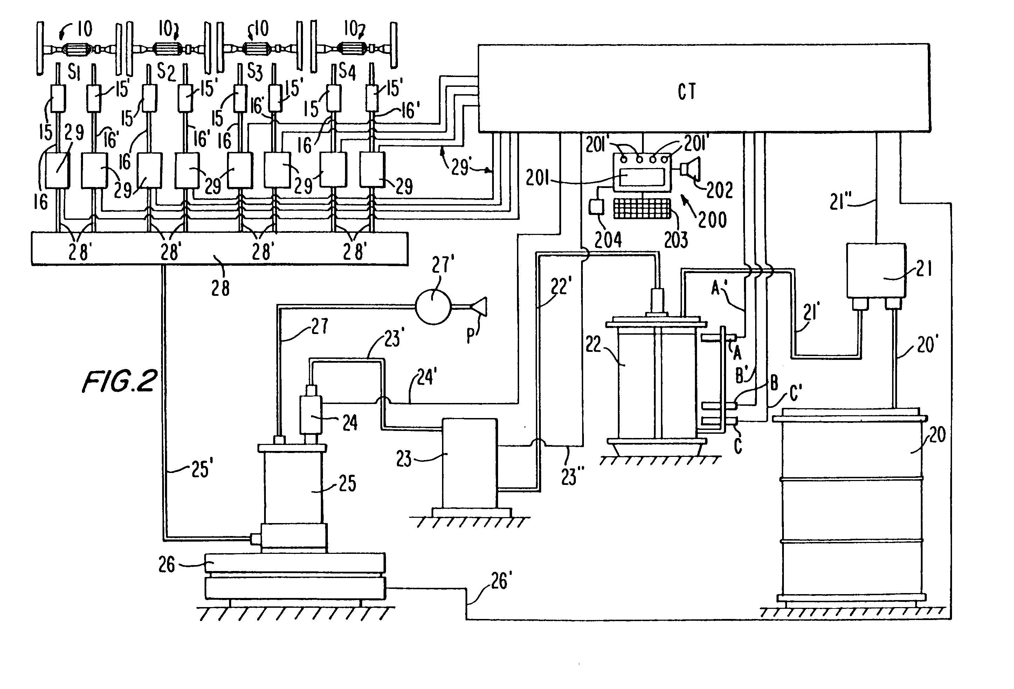

The invention will now be described with reference to FIGS. 1 and 2.

FIG. 1 shows an armature 10 which can be impregnated with resin according to the principles of the present invention.

The armature 10 includes a lamination stack 11 having slots 12 which receive wound coils of wire 13. The areas where the resin is applied to the coils correspond to extreme portions 14 and 14' which protrude from opposite ends of the lamination stack. A set S of resin dispensers 15 and 15' supplied with resin through respective tubes 16 and 16' are aligned over extreme portions 14 and 14' of the coils to drip the resin on the external coil wires. First, the dripped resin migrates through the extreme portions 14 and 14' to reach the portions of the coils which are within the slots 12 and then, as the air gaps in the coil portions within slots 12 become filled, the resin is able to fill and remain in the air gaps which are present in the extreme portions 14 and 14'.

Holding devices 17 and 17' shown in partial representation hold the ends of shafts 18 and 18' in order to maintain the armature coils in alignment with the resin dispensers 15 and 15' while the latter are dripping resin. Holding devices 17 and 17' are also capable of rotating armature 10 around its longitudinal axis during or after the application of resin. Holding devices 17 and 17' are part of the conveyor which transfers the armature through the resin dispensing station where the resin dispensers 15 and 15' are installed. Conveyor equipment of this type may be conventional, as shown in commonly-assigned U.S. Patent 5,401,531.

A plurality of armatures 10 are transported by the conveyor through the resin dispensing station. Each armature 10 is held by devices preferably like devices 17 and 17' fixed to the conveyor and spaced apart by a distance preferably substantially equal to the distance which separates adjacent sets S of resin dispensers 15 and 15' in the resin dispensing station. If the conveyor is advanced this distance at regular time intervals, the combined sets of resin dispensers S are able to produce an intermittent output of armatures at substantially the same production rate as the overall manufacturing line.

FIG. 2 shows a preferred embodiment of the equipment according to this invention for supplying the resin through tubes 16 and 16' to the sets of resin dispensers 15 and 15' shown in FIG. 1.

With reference to FIG. 2, supply reservoir 20 contains the resin. As shown, reservoir 20 preferably is a standard drum in which the resin is available from its manufacturer, as discussed above. Tube 20' connects drum 20 to a pump 21, which is preferably a peristaltic pump such as that commercially available from Autoclude, of the United Kingdom, for providing resin flow rates of preferably up to 4 liters per minute. Pump 21 transfers the resin from the supply drum 20 to monitoring reservoir 22 through tube 21'. Signal line 21'' from controller CT is used to control pump 21. Monitoring reservoir 22 is provided with level sensors A, B and C which will be described with more detail below.

Signal line 23'' from controller CT is used to control a pump 23, which preferably is a diaphragm pump. Diaphragm pump 23 draws the resin from monitoring reservoir 22 through tube 22' and transfers it to pressurized reservoir 25 by means of tube 23'. An electrically operated valve 24 is preferably connected between tube 23' and the entry of pressurized reservoir 25 to impede, or to allow, passage of the resin when valve 24 is closed or opened, respectively, by a signal on line 24' coming from the controller CT. The resin leaves the pressurized reservoir 25 through tube 25' which leads to collector 28. From collector 28, tubes 28' supply the resin through tubes 16 and 16' to the resin dispensers 15 and 15' by passing it through valves 29. Valves 29 can be opened or closed by signals sent along lines 29' coming from the controller CT, to allow passage of the resin to the resin dispensers 15 and 15' for dripping on the coils of the armature 10, or to impede dripping of the resin on the coils, respectively.

Level sensors A, B and C are used to control peristaltic pump 21, which in turn is used to maintain a sufficient quantity of resin in monitoring reservoir 22. Sensor A measures when peristaltic pump 21 has sufficiently filled monitoring reservoir 22 by sensing when the resin level becomes proximate to it. When the level of the resin in monitoring reservoir 22 is proximate to sensor A, a signal from sensor A along line A' tells the controller CT to issue a command on signal line 21'' to stop the peristaltic pump 21 from supplying further resin from drum 20.

Sensor B measures when the resin reaches a minimum level in monitoring reservoir 22 by sensing when the level of the resin becomes proximate to it. When the level of resin becomes proximate to sensor B, sensor B sends a signal along line B' to the controller CT, causing controller CT to issue a command on signal line 21'' to start the peristaltic pump 21 so that resin can be replenished up to the level sensed by sensor A.

Sensor C detects possible malfunctions of the impregnation system and sends a signal along line C' if monitoring reservoir 22 continues to have a level below sensor B and proximate to sensor C even after the peristaltic pump 21 has been operating for some time. A situation like this can occur if the peristaltic pump 21, even though it has been operating for some time, is for some reason not able to supply sufficient resin to monitoring reservoir 22 -- e.g., because drum 20 may be empty or pump 21 may be malfunctioning.

Pressurized reservoir 25 is preferably a substantially airtight container with openings only for connecting electrically operated valve 24, tube 25' and air pressure tube 27. Air pressure tube 27 supplies air, from a source indicated by arrow P, under pressure which can be adjusted by means of regulator 27' in order to maintain a desired pressure within pressurized reservoir 25. This pressure within pressurized reservoir 25 forces the resin from the pressurized reservoir 25 to the resin dispensers 15 and 15' in order to drip the resin onto the armature coils.

Pressurized reservoir 25 preferably rests on electronic scale 26 which provides to controller CT along line 26' a signal indicative of the instantaneous combined weight of pressurized reservoir 25 and the resin within it. The controller CT corrects the weight value corresponding to this signal by deducting the known weight of the pressurized reservoir 25, in order to yield the instantaneous weight of resin which is present in pressurized reservoir 25. To do this, controller CT preferably is programmed prior to activation of the impregnation system with the known the weight of the pressurized reservoir 25. As set forth above, scale 26 can be any suitable type of scale that has an electronic output that can be used by controller CT.

By means of the air pressure supplied through tube 27, the resin is driven from pressurized reservoir 25 through collector 28 and then through open valves 29 to reach the resin dispensers 15 and 15'. The valves 29 can be preset to supply a certain flow of resin which preferably is neither too high nor too low, to supply an approximate required weight of resin in a minimum amount of time during which the conveyor will be stationary. More precisely, there is a limit to how long the conveyor can be stationary, which is determined by the production rate of the overall armature manufacturing line. Therefore, the valves 29 are preferably adjusted to supply the target weight of resin before the conveyor has to start moving again to maintain the production time -- e.g., a movement every six seconds. Alternatively, valves 29 can merely open or close, and the flow rates can be adjusted in the manner discussed above, by controlling the time that any one valve 29 is open, or by adjusting the orifices of individual dispensers 15, 15'.

While resin is being dispensed, new resin is not pumped into pressurized reservoir 25; otherwise, the determination of the weight of resin dispensed could not be made by weighing reservoir 25 with scale 26. When resin is being dispensed, controller CT closes valve 24 to prevent resin from being pumped into reservoir 25. Closing valve 24 also maintains the proper pressure on the resin.

The operator's controls, shown schematically at 200, preferably have a display 201 which indicates the weight changes sensed by the balance 26. The operator can use this display information to help him carry out the required adjustments of valves 29 or dispensers 15, 15'. In addition, the various alarm conditions described above, and any other alarm conditions that may occur, can be annunciated on display 201, or on additional visual indicators 201'. Sounder 202 may also be provided to annunciate an aural alarm. Keyboard 203, or other entry device, can accept operator commands, and input/output interface 204 may also be provided to accept data or commands from, or send data or commands to, another system, such as the controller of the overall armature manufacturing line.

By means of the conveyor a particular armature to which resin is to be applied is presented at successive time intervals in alignment with each of the resin dispenser sets S₁, S₂, S₃ and S₄ shown in FIG. 2, which are located one after the other alongside the conveyor. Each resin dispenser set according to the invention drips a predetermined fraction of the total weight of resin which is to be applied to the armature. Preferably, as discussed above, the first resin dispenser set which an armature encounters will be adjusted to drip onto the coils a greater weight of resin than the weights of resin which are dripped onto that armature by the subsequent resin dispenser sets. Between two successive alignments of the armature with two adjacent resin dispenser sets, a certain period of time passes to allow transport of the armature, by means of the conveyor, through the separation distance between the resin dispenser sets.

As already described above, valves 29, or dispensers 15, 15' themselves, are preferably adjusted so that a greater amount of resin is applied by the first resin dispenser set. This is because at the beginning, when the armature is without resin or has received only a small quantity of the resin, the resin migrates more quickly through the coils. Later, when the coils are already impregnated with more resin, the migration is slower. Therefore, each subsequent resin dispenser set preferably supplies in a substantially equal time a smaller quantity of resin; otherwise, it is possible that excess resin may drip off the coils and be wasted. Again, as set forth above, valves 29 could be closed sooner at certain stations than at others.

Each armature preferably remains in alignment with a resin dispenser set for a time determined by the production rate of the armature manufacturing system. At the end of this time, the armature is moved forward to become aligned with the next set of resin dispensers, or if the armature has just been treated by the last resin dispenser set, to leave the resin dispenser station. Valves 29 are opened to allow passage of the resin to the resin dispensers 15 and 15', so that it can be dripped on the coils, only when the armatures are properly aligned with the resin dispensers. The conveyor is further provided with the capability to rotate the armatures continuously both when they are aligned and receiving resin from the resin dispensers, as well as afterwards when they are being transferred between adjacent resin dispenser sets. This rotation aids in uniform distribution of the resin within the coils and favors the complete migration of the resin within the coils.

Preferably, when the pressurized reservoir 25 starts to supply resin, all of the resin dispensers 15 and 15' are caused to drip resin by opening the valves 29 at substantially the same instant. Closure of these valves 29 occurs when there is a determination by the controller CT that the weight of resin that has left pressurized reservoir 25 is equal to a predetermined quantity which has previously been programmed into the controller CT. This determination is made by the controller CT which verifies the signal coming from the balance 26. More particularly, once this signal is equal to a predetermined value corresponding to the weight of resin which should be dispensed by pressure container 25, valves 29 are closed and the conveyor, after the production time has passed, proceeds to move the armatures forward to receive further resin or to allow an armature of the last dispenser set to leave the impregnation system. Valves 29 are opened, to dispense resin as has been described above, once the conveyor equipment supplies a signal to the controller CT to inform that the armatures are again aligned with the resin dispensers. This signal comes from the control equipment which moves the conveyor (not shown), and which may be conventional.

There may be alternatives to opening the valves 29 at the same time to start dripping resin. More particularly, because the controller CT is able to determine the weight of resin which is leaving pressurized reservoir 25, the controller CT can open some valves 29 only after a certain weight of resin has already been dripped by other valves 29 which are opened as soon as the conveyor gives the signal that the armatures are aligned.

Similarly, some valves 29 can be closed before others if a certain weight of resin has been dispensed by the valves 29 which are open. When this weight is reached, some valves 29 may be left open while others are closed. To carry out such differential opening and closing of the valves 29, controller CT may be programmed in advance with the weight of resin which should trigger the opening or closing of the valves 29 and also with a list of which of the valves 29 should be respectively opened or closed when this weight is reached.

Furthermore, controller CT is able to sum from a preset instant onwards the weight of resin leaving the pressurized reservoir 25 during each transfer operation of the conveyor. With this capability, the controller CT is able to calculate the accumulated consumption of resin as resin is applied to the armatures by the resin dispensing station, and is able to periodically compare this consumption with a reference value representing the total resin which is contained in a full drum such as drum 20. When these values are substantially equal, controller CT may annunciate an alarm which warns the operator that the drum needs to be changed or refilled. Controller CT also performs a timing verification to verify the time which it takes to supply predetermined weights of resin from pressurized reservoir 25. If this time, as determined based on the weights indicated by scale 26, exceeds a predetermined maximum time programmed into the controller CT, then the controller CT may annunciate an alarm to indicate that there is a malfunction in the impregnation system. The controller CT also may supply to the operator the weight of resin leaving the pressurized reservoir 25 during each transfer operation of the conveyor and the related time which it has taken to supply this weight of resin to the armatures. This information may be important to the operator because he may be able to establish trends concerning the pumping performance of the system, and the viscosity characteristics of the resin. Once the trend shows that conditions of weight and/or time are becoming less constant, valves 29, or the pressure supplied along line 27, may be readjusted to prevent the impregnation system from applying unacceptable quantities of resin to the armatures. Similarly, as discussed above, the cumulative weight of resin dispensed can be tracked, and when an amount approaching the weight of resin in a full drum 20 is reached, if level sensor C has not indicated that drum 20 should be changed or refilled, an alarm can be annunciated to indicate that one or more of level sensor C, scale 26 and controller CT are malfunctioning, because they are disagreeing as to whether or not drum 20 should be changed or refilled. As discussed above, all of these (and other) alarm conditions can be annunciated visually on displays 201, 201' or aurally by sounder 202.

As discussed above, the resin is replenished in pressurized reservoir 25 by a supply obtained through diaphragm pump 23. Pump 23 is turned on to supply the resin to the pressure container by a signal sent on line 23'' when the controller CT verifies that the weight of resin measured by balance 26 is close to a minimum value which is programmed into the controller CT during the setup stage of the impregnation system. During pumping by the diaphragm pump 23 to replenish resin in the pressurized reservoir 25, electrically operated valve 24 is maintained in an open condition by an excitation signal sent along line 24'. The diaphragm pump 23 is switched off, to stop supplying resin to the pressurized reservoir 25, when the balance 26 measures that a preset maximum weight of resin has been reached.

As discussed above, pumping by the diaphragm pump 23 to fill the pressurized reservoir 25, and contemporaneous opening of the electrically operated valve 24, occur only during the transfer periods of the conveyor. More precisely, no resin is supplied by the diaphragm pump 23 to the pressurized reservoir 25 during the periods when resin is dripped on the armatures. To achieve this, the diaphragm pump 23 is commanded to stop pumping based on the signal received from the controls of the conveyor equipment which indicates that the armatures are aligned to receive the resin.

Substantially at that moment, as discussed above, controller CT stores in memory the weight of resin in pressurized reservoir 25 as a reference, to determine when the required weight of resin has been dripped on the armatures, so that valves 29 can be closed at the proper time.

Thus it is seen that a method and apparatus have been provided for controlling the amount of resin applied to armatures of dynamoelectric machines without costly piston displacement pumps based on the weight of the resin being applied, and which allow for convenient operator adjustment of the resin dispensers. One skilled in the art will appreciate that the present invention can be practiced by other than the described embodiments, which are presented for purposes of illustration and not of limitation, and the present invention is limited only by the claims which follow.

## Claims

1. A system for applying resin to armatures (10) of dynamoelectric machines, said system comprising:
a source of resin;
a dispenser (15, 15') for dispensing said resin onto at least one of said armatures (10); said system being characterized in that it further comprises :
means (26) for weighing said source of resin while said resin is being dispensed by said dispenser to determine a weight of resin being dispensed; and
means for controlling said dispenser responsive to said determined weight.

2. The resin applying system of claim 1 further comprising a conveyor for transporting said armatures (10) past said dispenser (15, 15').

3. The resin applying system of claim 1 wherein:
said source of resin comprises a first reservoir (25) for containing a supply of resin to be dripped onto said armatures (10) by said dispenser (15, 15'); said system further comprising:
a delivery system for supplying said resin from said source of resin to said dispenser.

4. The resin applying system cf claim 3 wherein said delivery system comprises:
means for maintaining a substantially constant pressure on said supply of resin in said first reservoir (25),
a dispensing conduit (25') for conducting said resin from said first reservoir to said dispenser, and
a dispenser valve (29) in said dispensing conduit between said first reservoir and said dispenser.

5. The resin applying system of claim 4, wherein:
said weighing means provides a signal (26') representative of said weight;
said control means comprises a control unit (CT) responsive to said signal; and
said delivery system further comprises:
a supply reservoir (20) containing a supply of said resin;
a monitoring reservoir (22) having a plurality of level monitors for monitoring a level of said resin therein;
a supply conduit (20', 21') for supplying resin from said supply reservoir to said monitoring reservoir;
a supply pump (21) in-line in said supply conduit;
a feed line (22', 23') connecting said monitoring reservoir (22) to said first reservoir (25); and
a feed pump (23) in-line in said feed line; wherein:
each of said level monitors is connected to said control unit for supplying a respective level signal thereto;
each of said supply pump and said feed pump is connected to, and controllable by, said control unit;
said feed pump (23) pumps resin from said monitoring reservoir (22) to said first reservoir (25) whenever said dispenser (15, 15') is not dispensing resin and said first reservoir (25) is not full; and
said supply pump (21) pumps resin from said supply reservoir (20) to said monitoring reservoir (22) when said level signals indicate that resin in said monitoring reservoir has fallen below a predetermined level.

6. The resin applying system of claim 5 further comprising an alarm annunciator connected to said control unit; wherein:
said control unit (CT) causes said alarm annunciator to annunciate a refill alarm when said level signals from said level monitors indicate that said level of resin in said monitoring reservoir (22) is not increasing after operation of said supply pump (21), indicating at least one of (a) malfunction of said supply pump, and (b) that said supply reservoir (20) is at least substantially empty and requires one of (1) refilling and (2) replacement.

7. The resin applying system of claim 6 wherein:
an initial weight of said resin in said supply reservoir (20) is stored in said memory of said control unit (CT);
said control unit accumulates in said memory a cumulative weight of said resin dispensed from said first reservoir (25); and
said control unit causes said alarm annunciator to annunciate a supply alarm when said cumulative weight of resin dispensed from said first reservoir (25) approaches said initial weight of said resin in said supply reservoir (20), indicating that said supply reservoir (20) is at least substantially empty and requires one of (a) refilling and (b) replacement.

8. The resin applying system of claim 7 wherein said control unit causes said alarm annunciator to annunciate a mismatch alarm when one of (a) said level signals, and (b) said cumulative weight of resin dispensed, indicates that said supply reservoir (20) is at least substantially empty and the other of (a) said level signals, and (b) said cumulative weight of resin dispensed, fails to indicate that said supply reservoir (20) is at least substantially empty, said mismatch alarm indicating a malfunction in at least one of (a) said level monitors, (b) said weighing means (26), and (c) said memory for accumulating said cumulative weight of resin dispensed.

9. The resin applying system of claim 5 further comprising an alarm annunciator connected to said control unit; wherein:
an initial weight of said resin in said supply reservoir is stored in said memory of said control unit;
said control unit (CT) accumulates in said memory a cumulative weight of said resin dispensed from said first reservoir (25); and
said control unit (CT) causes said alarm annunciator to annunciate a supply alarm when said cumulative weight of resin dispensed from said first reservoir (25) approaches said initial weight of said resin in said supply reservoir (20), indicating that said supply reservoir is at least substantially empty and requires one of (a) refilling and (b) replacement.

10. The resin applying system of claim 5 further comprising an isolation valve (24) for isolating said first reservoir from said feed line when said dispenser (15, 15') is dispensing resin, for maintaining said substantially constant pressure on said resin in said first reservoir (25) when said dispenser (15, 15') is dispensing resin.

11. The resin applying system of claim 4 wherein said means for maintaining a substantially constant pressure on said supply of resin in said first reservoir comprises:
a source of air pressure (P);
an air pressure line (27) connecting said source of air pressure to said first reservoir; and
a pressure regulator (27') in-line in said air pressure line.

12. The resin applying system according to any of the preceding claims comprising at least one resin dispensing station, each said resin dispensing station comprising two said resin dispensers (15, 15'), one for each end of an armature.

13. The system of claim 12 comprising a plurality cf said resin dispensing stations, each of said plurality of resin dispensing stations dispensing a different dispensed weight of resin per unit time as compared to others of said plurality of resin dispensing stations.

14. The system of claim 13 comprising a plurality of said dispenser valves (29) corresponding to said plurality of dispensers (15, 15'), said different dispensed weights being provided by opening and closing a first portion of said plurality of dispenser valves at at least one different time than one or more second portions of said plurality of dispenser valves.

15. The system of claim 13 wherein each said dispenser has an adjustable flow rate, said different dispensed weights being provided by adjusting the flow rate of each of said plurality of dispensers (15, 15').

## Patentansprüche

1. Ein System zum Aufbringen von Harz auf Anker (10) von dynamoelektrischen Maschinen, wobei das System aufweist:
eine Harzquelle;
eine Ausgabeeinrichtung (15, 15') zum Ausgeben des Harzes auf mindestens einen der Anker (10), wobei das System dadurch charakterisiert ist, daß es ferner aufweist:
Einrichtungen (26) zum Abwiegen der Harzquelle während das Harz durch die Ausgabeeinrichtung ausgegeben wird, um das Gewicht des ausgegebenen Harzes zu bestimmen; und
Einrichtungen zum Kontrollieren der Ausgabeeinrichtungen in Reaktion auf das bestimmte Gewicht.

2. Das Harzaufbringsystem nach Anspruch 1, ferner aufweisend ein Förderband zum Transportieren der Anker (10) an der Ausgabeeinrichtung (15, 15') vorbei.

3. Das Harzaufbringsystem nach Anspruch 1, wobei:
die Harzquelle ein erstes Reservoir (25), welches eine Versorgung von Harz, das auf die Anker (10) durch die Ausgabeeinrichtung (15, 15') getröpfelt werden soll, enthält; wobei das System ferner aufweist:
ein Liefersystem zum Zuführen des Harzes von der Harzquelle zu der Ausgabeeinrichtung.

4. Das Harzaufbringssystem nach Anspruch 3, worin das Liefersystem aufweist:
Einrichtungen zum Aufrechterhalten eines im wesentlichen konstanten Druckes auf die Harzversorgung in dem ersten Reservoir (25),
einen Ausgabekanal (25') zum Leiten des Harzes von dem ersten Reservoir zu der Ausgabeeinrichtung, und
ein Ausgabeventil (29) in dem Ausgabekanal zwischen dem ersten Reservoir und der Ausgabeeinrichtung.

5. Das Harzaufbringsystem nach Anspruch 4, wobei:
die Abwiegeinrichtungen ein Signal (26') bereitstellen, das repräsentativ für das Gewicht ist;
die Kontrolleinrichtungen eine Kontrolleinheit (CT) aufweisen, die auf das Signal reagiert; und
das Liefersystem ferner aufweist:
ein Versorgungsreservoir (20), das eine Versorgung des Harzes beinhaltet;
ein Überwachungsreservoir (22), das eine Mehrzahl von Niveauüberwachungsgeräten aufweist zum Überwachen eines Niveaus des darin befindlichen Harzes;
ein Versorgungskanal (20', 21') zum Liefern von Harz von dem Versorgungsreservoir zu dem Überwachungsreservoir,
eine Versorgungspumpe (21) in Reihe mit dem Versorgungskanal;
eine Zuleitung (22', 23'), die das Überwachungsreservoir (22) mit dem ersten Reservoir (25) verbindet; und
eine Zuleitungspumpe (23), die in einer In-Line-Anordnung zu der Zuleitung steht; wobei:
jeder der Niveausüberwachungsgeräte mit der Kontrolleinheit verbunden ist, um dorthin ein jeweiliges Niveausignal zu liefern;
jede der Versorgungspumpen und der Zuleitungspumpen sind verbunden mit und kontrollierbar durch die Kontrolleinheit;
die Zuleitungspumpe (23) Harz von dem Überwachungsreservoir (22) zu dem ersten Reservoir (25) pumpt, wann immer die Ausgabeeinrichtung (15, 15') kein Harz ausgibt und das erste Reservoir (25) nicht voll ist; und
die Versorgungspumpe (21) Harz von dem Versorgungsreservoir (20) zu dem Überwachungsreservoir (22) pumpt, wenn die Niveausignale anzeigen, daß das Harz in dem Überwachungsreservoir unter ein vorbestimmtes Niveau gefallen ist.

6. Das Harzaufbringsystem nach Anspruch 5, ferner aufweisend ein akustisches Alarmmeldegerät, das mit der Kontrolleinheit verbunden ist; wobei:
die Kontrolleinheit (CT) das akustische Alarmmeldegerät dazu bringt, ein Wiederauffüllalarm zu melden, wenn die Niveausignale der Niveauüberwachungsgeräte andeuten, daß das Harzniveau in dem Überwachungsreservoir (22) nach Betrieb der Versorgungspumpe (21) nicht ansteigt, und dabei mindestens eine der folgende Tatbestände anzeigt (a) Fehlfunktion der Versorgungspumpe, (b) daß das Versorgungsreservoir (20) zumindest im wesentlichen leer ist, und
entweder erfordert (1) aufgefüllt zu werden oder (2) ersetzt zu werden.

7. Das Harzaufbringsystem von Anspruch 6, worin:
ein Anfangsgewicht des Harzes in dem Versorgungsreservoir (20) in dem Speicher der Kontrolleinheit (CT) gespeichert ist;
die Kontrolleinheit in dem Speicher ein sich addierendes Gewicht des Harzes speichert, der von dem ersten Reservoir (25) ausgegeben wurde; und
die Kontrolleinheit das akustische Alarmmeldegerät veranlaßt, einen Versorgungsalarm zu melden, wenn das sich addierende Gewicht des ausgegebenen Harzes von dem ersten Reservoir (25) sich dem Anfangsgewicht des Harzes in dem Versorgungsreservoir (20) annähert, was anzeigt, daß das Versorgungsreservoir (20) zumindest im wesentlichen leer ist und verlangt, entweder (a) wieder aufgefüllt oder (b) ersetzt zu werden.

8. Das Harzaufbringsystem von Anspruch 7, worin die Kontrolleinheit das akustische Alarmmeldegerät dazu bringt, einen Alarm für Fehlanpassungen zu melden, wenn entweder (a) die Niveausignale oder (b) das sich addierende Gewicht des ausgegebenen Harzes anzeigen, daß das Versorgungsreservoir (20) zumindest im wesentlichen leer ist und das entsprechend andere, d.h. entweder (a) die Niveausignale oder (b) das sich addierende Gewicht des ausgegebenen Harzes darin versagt, anzuzeigen, daß das Versorgungsreservoir (20) zumindest im wesentlichen leer ist, wobei der Fehlanpassungsalarm zumindest in einem der Einrichtungen, nämlich in (a) den Niveauüberwachungsgeräte, (b) der Abwiegeeinrichtung (26) oder (c) dem Speichers zum Aufaddieren des sich addierenden Gewichts des ausgegebenen Harzes eine Fehlfunktion anzeigt.

9. Das Harzaufbringsystem nach Anspruch 5, ferner aufweisend ein akustisches Alarmmeldegerät, das mit der Kontrolleinheit verbunden ist; worin:
ein Anfangsgewicht des Harzes in dem Versorgungsreservoir in dem Speicher der Kontrolleinheit gespeichert ist;
die Kontrolleinheit (CT) in dem Speicher ein sich addierenden Gewicht des ausgegebenen Harzes von dem ersten Reservoir (25) aufaddiert; und
die Kontrolleinheit (CT) das akustische Alarmmeldegerät dazu veranlaßt, einen Versorgungsalarm zu melden, wenn das sich addierende Gewicht des ausgegebenen Harzes von dem ersten Reservoir (25) sich dem Anfangsgewicht des Harzes innerhalb des Versorgungsreservoirs (20) annähert, anzeigend, daß das Versorgungsreservoir zumindest im wesentlichen leer ist und verlangt, entweder (a) wieder aufgefüllt oder (b) ersetzt zu werden.

10. Das Harzaufbringsystem von Anspruch 5, ferner aufweisend ein Trennventil (24) zum Trennen des ersten Reservoirs von der Zuleitung, wenn das Ausgabegerät (15, 15') Harz ausgibt und zum Aufrechterhalten des im wesentlichen konstanten Druckes auf das Harz innerhalb des ersten Reservoir (25), wenn das Ausgabegerät (15, 15') Harz ausgibt.

11. Das Harzaufbringsystem von Anspruch 4, worin die Einrichtung zum Aufrechterhalten eines im wesentlichen konstanten Druckes auf die Harzversorgung in dem ersten Reservoir aufweist:
eine Luftdruckquelle (P);
eine Luftdruckzuleitung (27), die die Luftdruckquelle mit dem ersten Reservoir verbindet; und
ein Druckreguliergerät, das in-line in der Luftdruckzuleitung angeordnet ist.

12. Ein Harzaufbringsystem gemäß einem der vorhergehenden Ansprüche, aufweisend mindestens eine Harzausgabestation, wobei jede Harzausgabestation zwei Harzausgabeeinrichtungen (15, 15') aufweist, eine für jedes Ende eines Ankers.

13. Das System von Anspruch 12, aufweisend eine Mehrzahl von Harzausgabestationen, jede dieser Mehrzahl von Harzausgabestationen gibt pro Zeiteinheit ein unterschiedliches ausgegebenes Harzgewicht aus im Vergleich zu anderen Harzausgabestationen der Mehrzahl von Harzausgabestationen.

14. Das System von Anspruch 13, aufweisend eine Mehrzahl von Ausgabeventilen (29), entsprechend der Mehrzahl von Ausgabeeinrichtungen (15, 15'), wobei die unterschiedlich ausgegebenen Gewichte dadurch bereitgestellt werden, daß ein erster Teil der Mehrheit der Ausgabeventile geöffnet und geschlossen wird zu zumindest einer unterschiedlichen Zeit als eine oder mehrere zweite Teile der Mehrzahl der Ausgabeventile.

15. Das System von Anspruch 13, worin jedes Ausgabegerät eine anßadbare Flußrate hat, wobei die unterschiedlich ausgegebenen Gewichte dadurch bereitgestellt werden, daß die Flußrate von jedem der Mehrzahl der Ausgabeeinrichtungen (15, 15') angepaßt wird.

## Revendications

1. Système pour appliquer de la résine sur des armatures (10) de machines dynamoélectriques, ledit système comprenant :
une source de résine ;
un distributeur (15, 15') pour distribuer ladite résine sur au moins une desdites armatures (10) ; ledit système étant caractérisé en ce qu'il comprend en outre :
un moyen (26) pour peser ladite source de résine pendant la distribution de ladite résine par ledit distributeur afin de déterminer en poids de résine à distribuer ; et
un moyen pour commander ledit distributeur en fonction dudit poids déterminé.

2. Système d'application de résine selon la revendication 1, comprenant en outre un convoyeur pour transporter lesdites armatures (10) devant ledit distributeur (15, 15').

3. Système d'application de résine selon la revendication 1, dans lequel :
ladite source de résine comprend un premier réservoir (25) pour contenir une réserve de résine que ledit distributeur (15, 15') doit faire couler sur lesdites armatures (10) ; ledit système comprenant en outre :
un système de délivrance pour alimenter ledit distributeur avec ladite résine provenant de ladite source de résine.

4. Système d'application de résine selon la revendication 3, dans lequel ledit système de délivrance comprend :
un moyen pour exercer une pression sensiblement constance sur ladite réserve de résine dans ledit premier réservoir (25),
un conduit de distribution (25') pour conduire ladite résine dudit premier réservoir audit distributeur, et
une vanne distributrice (29) agencée dans ledit conduit de distribution, entre ledit premier réservoir et ledit distributeur.

5. Système d'application de résine selon la revendication 4, dans lequel :
ledit moyen de pesée délivre un signal (26') représentatif dudit poids ;
ledit moyen de commande comprend une unité de commande (CT) sensible audit signal ; et
ledit système de délivrance comprend en outre :
un réservoir d'alimentation (20) contenant une réserve de dite résine ;
un réservoir de contrôle (22) comportant plusieurs éléments de contrôle de niveau pour contrôler le nouveau de ladite résine à l'intérieur dudit réservoir de contrôle ;
un conduit d'alimentation (20', 21') pour alimenter ledit réservoir de contrôle avec la résine provenant dudit réservoir d'alimentation ;
une pompe d'alimentation (21) en série dans ledit conduit d'alimentation ;
une ligne de circulation (22', 23') raccordant ledit réservoir de contrôle (22) audit premier réservoir (25) ; et
une pompe de circulation (23) en série dans ladite ligne de circulation ; dans lequel :
chacun desdits éléments de contrôle de niveau est raccordé à ladite unité de commande à laquelle il délivre un signal de niveau correspondant ;
chacune desdites pompes d'alimentation et de circulation est raccordée à ladite unité de commande qui peut la commander ;
ladite pompe de circulation (23) pompe la résine dans ledit réservoir de contrôle (22) pour la délivrer audit premier réservoir (25) chaque fois que ledit distributeur (15, 15') ne distribue pas de résine et que ledit réservoir (25) n'est pas plein ; et
ladite pompe d'alimentation (21) pompe la résine dans ledit réservoir d'alimentation (20) pour la délivrer audit réservoir de contrôle (22) lorsque lesdits signaux de niveau indiquent que la résine dans ledit réservoir de contrôle est tombée en dessous d'un niveau prédéterminé.

6. Système d'application de résine selon la revendication 5, comprenant en outre un dispositif d'alarme raccordé à ladite unité de commande ; dans lequel :
ladite unité de commande (CT) donne audit dispositif d'alarme l'ordre de déclencher une alarme de remplissage lorsque lesdits signaux de niveau délivrés par lesdits éléments de contrôle de niveau indiquent que ledit niveau de résine dans ledit réservoir de contrôle (22) n'augmente pas après la mise en oeuvre de ladite pompe d'alimentation (21), indiquant un problème, au moins, relatif (a) à un dysfonctionnement de ladite pompe d'alimentation ou (b) au fait que ledit réservoir d'alimentation (20) est tout au moins pratiquement vide et a besoin soit (1) d'être rempli, soit (2) d'être remplacé.

7. Système d'application de résine selon la revendication 6, dans lequel :
un poids initial de ladite résine dans ledit réservoir d'alimentation (20) est stocké dans ladite mémoire de ladite unité de commande (CT) ;
ladite unité de commande accumule dans ladite mémoire un poids cumulé de ladite résin distribuée par ledit premier réservoir (25) ; et
ladite unité de commande donne au dispositif d'alarme l'ordre de déclencher une alarme d'alimentation lorsque ledit poids cumulé de résine délivrée par ledit premier réservoir (25) est proche dudit poids initial de ladite résine dans ledit réservoir d'alimentation (20), indiquant que ledit réservoir d'alimentation (20) est tout au moins pratiquement vide et a besoin soit (1) d'être rempli, soit (2) d'être remplacé.

8. Système d'application de résine selon la revendication 7, dans lequel ladite unité de commande donne audit dispositif d'alarme l'ordre de déclencher une alarme de déséquilibre lorsque l'un parmi (a) lesdits signaux de niveau et (b) ledit poids cumulé de résine délivrée, indique que ledit réservoir d'alimentation (20) est tout au moins pratiquement vide, et que l'autre parmi (a) lesdits signaux de niveau et (b) ledit poids cumulé de résine distribuée, ne parvient pas à indiquer que ledit réservoir d'alimentation (20) est tout au moins pratiquement vide, ladite alarme de déséquilibre indiquant un dysfonctionnement dans l'un au moins parmi (a) lesdits éléments de contrôle de niveau, (b) ledit moyen de pesée (26), et (c) ladite mémoire pour accumuler ledit poids cumulé de résine délivrée.

9. Système d'application de résine selon la revendi-cation 5, comprenant en outre un dispositif d'alarme raccordé à ladite unité de commande ; dans lequel :
un poids initial de ladite résine dans ledit réservoir d'alimentation est stocké dans ladite mémoire de ladite unité de commande ;
ladite unité de commande (CT) accumule dans ladite mémoire un poids cumulé de ladite résine délivre par ledit premier réservoir (25) ; et
ladite unité de commande (CT) donne audit avertisseur d'alarme l'ordre de déclencher une alarme d'alimentation lorsque ledit poids cumulé de résine délivrée par ledit premier réservoir (25) est proche dudit poids initial de ladite résine dans ledit réservoir d'alimentation (20), indiquant que ledit réservoir d'alimentation est tout au moins pratiquement vide et a besoin soit (a) d'être rempli soit (b) d'être remplacé.

10. Système d'application de résine selon la revendication 5, comprenant en outre une vanne d'isolement (24) pour isoler ledit premier réservoir de ladite ligne de circulation lorsque ledit distributeur (15, 15') est en train de distribuer de la résine, pour exercer ladite pression sensiblement constante sur ladite résine dans ledit premier réservoir (25) lorsque ledit distributeur (15, 15') délivre de la résine.

11. Système d'application de résine selon la revendication 4, dans lequel ledit moyen pour exercer une pression sensiblement constante sur ladite réserve de résine dans ledit premier réservoir comprend :
une source d'air comprimé (P) ;
une ligne d'air comprimé (27) raccordant ladite source d'air comprimé audit premier réservoir ; et
un régulateur de pression (27') en série dans ladite ligne d'air comprimé.

12. Système d'application de résine selon l'une quelconque des revendications précédentes, comprenant au moins une station de distribution de résine, chaque station de distribution de resine comprenant deux distributeurs de résines (15, 15'), avec un pour chaque extrémité d'une armature.

13. Système selon la revendication 12, comprenant une pluralité de stations de distribution de résine, chaque station de ladite pluralité de stations de distribution de resine distribuant un poids de résine distribué différent par unité de temps en comparaison avec les autres stations de ladite pluralité de stations de distribution de résine.

14. Système selon la revendication 13, comprenant une pluralité de vannes distributrice (29), correspondant à ladite pluralité de distributeurs (15, 15'), lesdits différents poids distribués étant obtenus en ouvrant et en fermant un premier groupe de vannes de ladite pluralité de vannes distributrices à au moins un moment différent par rapport à un ou plusieurs seconds groupes de vannes de ladites pluralité de vannes distributrices.

15. Système selon la revendication 13, dans lequel ledit distributeur a un débit réglable, lesdits diflérents poids distribués étant obtenus en réglant le débit de chaque distributeur de ladite pluralité de distributeurs (15, 15').
